(19) Europäisches Patentamt
European Patent Office
Office européen des brevets

(11) **EP 1 497 161 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(21) Anmeldenummer: 03729824.7

(22) Anmeldetag: **09.04.2003**

(51) Int Cl.:
**B60R 21/015** *(2006.01)*

(86) Internationale Anmeldenummer:
**PCT/DE2003/001164**

(87) Internationale Veröffentlichungsnummer:
**WO 2003/089276 (30.10.2003 Gazette 2003/44)**

(54) **VERFAHREN ZUR FESTSTELLUNG DER BELEGUNG EINES FAHRZEUGSITZES**

METHOD FOR ESTABLISHING THE OCCUPATION OF A VEHICLE SEAT

PROCEDE DE DETECTION DE L'OCCUPATION D'UN SIEGE DE VEHICULE

(84) Benannte Vertragsstaaten:
**DE ES FR GB IT SE**

(30) Priorität: **19.04.2002 DE 10217690**

(43) Veröffentlichungstag der Anmeldung:
**19.01.2005 Patentblatt 2005/03**

(73) Patentinhaber: **Bayerische Motoren Werke Aktiengesellschaft**
**80809 München (DE)**

(72) Erfinder:
• **BETZ, Volkmar**
**84539 Ampfing (DE)**
• **STIFTER, Thomas**
**89281 Illereichen (DE)**

(56) Entgegenhaltungen:
**EP-A- 0 891 898**   **WO-A-01/85497**
**DE-C- 10 047 189**

• **BRODEUR RAYMOND ET AL: "The Initial Position and Postural Attitudes of Driver Occupants, Posture" ERL, ERGONOMIC RESEARCH LABORATORIES, [Online] 21. Juni 1996 (1996-06-21), XP002251203 MSU, East Lansing, MI Gefunden im Internet: <URL:http://www.erlllc.com/reports/ERL_Sea t_Position_Report.pdf> [gefunden am 2003-08-13]**
• **KRUSE ROLAND: "Perzeptionsadäquate Parametrisierung von objektiven Sitzdruckverteilungen beim Menschen" UNIVERSITÄT OLDENBURG, STUDIENGANG MARINE UMWELTWISSENSCHAFTEN, DIPLOMARBEIT, [Online] 23. Dezember 2001 (2001-12-23), XP002251106 Oldenburg Gefunden im Internet: <URL:http://www.physik.uni-oldenburg.de/Do cs/aku/staff/rolandk/Sitzdruckverteilung_R K.pdf> [gefunden am 2003-08-13]**

**Beschreibung**

Die vorliegende Erfindung betrifft ein Verfahren zur Unterscheidung von Personen und sonstigen Objekten auf Fahrzeugsitzen durch Aufnahme und Auswertung der durch sie auf dem Sitz bewirkten Druckverteilung. Sie dient insbesondere zur Unterscheidung zwischen einer Sitzbelegung durch eine Person oder einen Kindersitz, um im Falle einer Belegung durch einen Kindersitz beispielsweise die Aktivierung eines Airbags zu verhindern, im Gegensatz zu einer Belegung durch eine Person.

Die Insassen eines Kraftfahrzeuges werden üblicherweise durch Rückhaltesysteme, unter anderem beispielsweise durch einen oder mehrere Airbags, vor den Auswirkungen einer Kollision des Fahrzeuges geschützt. Hierbei ist zu unterscheiden, ob ein Sitz durch einen Kindersitz oder eine Person besetzt ist. Im Falle eines Kindersitzes hat ein Auslösen des Airbags zu unterbleiben, weil dies für ein im Kindersitz sitzendes Kind tödlich ausgehen kann, insbesondere wenn der Kindersitz gegen die Fahrtrichtung ausgerichtet ist. Im Fall einer Person soll der Airbag auslösen, um die Person zu schützen.

Es ist darüber hinaus wünschenswert, von der beteiligten Sensorik weitere Informationen über die Art der Sitzbelegung zu erhalten, um flexibel darauf reagieren zu können. So gibt es beispielsweise Bestrebungen, einen Airbag mit einer je nach Unfallform oder Crash-Intensität variierenden Stärke aufzublasen, bei Bedarf ergänzend Seiten-Airbags hinzuzuziehen, Gurtstraffer je nach Bedarf in unterschiedlicher Stärke zu betätigen etc. Wird die Belegung durch eine erwachsene Person festgestellt, ist es zusätzlich wünschenswert, ihre Sitzposition genau zu kennen und darauf flexibel zu reagieren. Es gibt auch für einen Erwachsenen Sitzpositionen, in denen das Aufblasen eines Airbags unter Umständen nicht zu empfehlen ist, da schwere Gesundheitsschäden für den Passanten zu befürchten sind.

Alle Ansätze zur Lösung dieses Problems müssen sich aus wirtschaftlichen Gründen zusätzlich um Kosteneffektivität bemühen, um das verwendete Verfahren in der Serienproduktion einsetzen zu können. Die verwendete Sensorik muß kostengünstig herzustellen und in das Fahrzeug zu integrieren sein, und sich mit vertretbarem Aufwand warten lassen.

Als Sensorik kommen unter anderem Kamera-Systeme, optische Sensoren und Ultraschall-Sensoren zur Anwendung, sowie Drucksensoren in den Fahrzeugsitzen. Kamera-Systeme können zwar sehr weitreichende Informationen über die Abläufe in der Fahrgastzelle liefern, sind aber andererseits teuer in der Serie, ggf. auch wartungsintensiv. Zusätzlich ist bei allen mit Licht oder Ultraschall arbeitenden Sensoren auf Abschattung zu achten. Drucksensoren in den Fahrzeugsitzen sind kostengünstig herzustellen, robust, wartungsarm und nicht von dem Problem der Abschattung betroffen.

Die ersten Ansätze beschränkten sich auf eine Bestimmung des Gesamtgewichtes anhand von Drucksensoren. Diese Lösung ist insofern nicht befriedigend, als bei einer erwachsenen Person ein deutlicher Teil ihres Gewichtes durch die Lehne, sowie durch die in der Regel auf dem Fahrzeugboden aufgesetzten Füße abgetragen wird. Eine Messung anhand in den Fahrzeugsitz integrierter Sensoren wird daher immer nur eine untere Grenze des Gesamtgewichtes liefern. Zu bedenken ist hierbei auch, daß Kindersitze mit einer Gurtvorspannung in das Fahrzeug eingesetzt werden, also den Sitz ggf. mit einer deutlich höheren Kraft belasten als ihrem Eigengewicht entspricht. Die Grenzen zwischen einem leichten Erwachsenen und einem schweren Kindersitz können daher leicht verschwimmen, wenn nur das Gesamtgewicht als Kriterium herangezogen wird.

Beispielsweise wird in den Druckschriften LU 90106 und US 6,348,663 das Druckmuster einer sitzenden Person dahingehend analysiert, daß die Sitzfläche in mehrere Sektoren unterteilt und die Gewichtsaufteilung auf diese Sektoren ermittelt und bewertet wird. Hieraus wird auf die Größe oder das Gewicht der Person geschlossen, oder auf beides. Beide Ausführungen enthalten keine Kriterien, die Personen von sonstigen Objekten unterscheiden.

Die US 6,243,634 weist Sensoren im gesamten Sitz auf, also auch in der Lehne, um eine verbesserte Bestimmung des Gewichtes, des Schwerpunktes und der Position zu erreichen. Hierdurch wird eine verbesserte Erkennung von nicht-optimalen Sitzpositionen angestrebt, beispielsweise ob eine Person vorgebeugt ist. Es geht hierbei allerdings nicht um eine Unterscheidung von Personen und sonstigen Objekten, hierfür werden keine Kriterien angegeben.

Die US 5,941,560 und US 6,170,866 nennen explizit den Schutz von Kindern in Kindersitzen im Titel. In beiden Dokumenten wird die Existenz eines nicht näher beschriebenen Sensorsystems vorausgesetzt, das in der Lage ist, Kindersitze zu erkennen. Als Reaktion wird entweder ein Signal ausgegeben, um den Fahrer zu informieren, oder der Fahrzeugsitz automatisch nach hinten gefahren. Hierbei wird keine Analyse des Druckmusters vorgenommen.

In US 6,366,200 wird zwischen einer Besetzung des Fahrzeugsitzes durch ein Kind, einen Erwachsenen oder einen Kindersitz unterschieden. Die Kriterien sind zum Einen das Gewicht, zum Anderen das Signal eines im Englischen mit "living body proximity sensor" beschriebenen Sensors, d.h. eines Sensors, der die Nähe eines lebenden Objektes anzeigt.

In US 6,272,411 wird das Signal von mehreren Sensoren kombiniert, um eine möglichst vollständige Information über den Status der Sitzbelegung zu erhalten. Es soll festgestellt werden, ob der Sitz frei oder besetzt ist, und falls er besetzt ist, dann wie. Ein wesentlicher Akzent der Erfindung liegt in der Auswertung dynamischer Informationen, d.h. Sensorsignale werden zeitabhängig erfaßt und periodisch mit einer Datenbank abgeglichen, um weitere Informationen aus dem Zeitverhalten ziehen zu können. Aufgrund dieser Informationen wird nicht nur über den Einsatz oder Nicht-Einsatz des Airbags entschieden, sondern auch über Steuerung der Stärke des Aufblasens, Seitenairbags etc.

US 6,252, 240 arbeitet mit der Kombination mehrerer Sensoren, unter anderem positionsempfindlichen optischen Sensoren, Gewichts und Geschwindigkeitssensoren. Es werden Wahrscheinlichkeiten für bestimmte Szenarios berechnet, und der Airbag entsprechend dem nach wahrscheinlichsten Szenario gesteuert. Dabei wird keine Analyse von Druckmustern zur Unterscheidung von Personen und sonstigen Objekten herangezogen.

Aus der DE 100 47 189 C1, die die Merkmale des Oberbegriffs des Ansprüche 1 und 9 zeigt, ist ein Verfahren zur Insassenklassifikation mit einer Sitzmatte in einem Fahrzeugsitz bekannt. Die Sitzmatte weist eine Matrix aus Drucksensoren auf, die in Abhängigkeit von einer Belastung des Fahrzeugsitzes als aktive und inaktive Matrixelemente erkannt werden und ein Sitzprofil bilden. Um Doppeldeutigkeiten bei Merkmalen wie der belegten Sitzfläche zu vermeiden, ist vorgeschlagen, dass aus den inaktiven und aktiven Matrixelementen eine erste Ergebnismatrix gebildet wird. Weitere Ergebnismatrizen werden aus vorhandenen Ergebnismatrizen durch logische Verknüpfung gebildet. Benachbarte Matrixelemente werden der logischen Verknüpfung für die Matrixelemente unterzogen. Aus den aktiven Matrixelementen der jeweiligen gebildeten Ergebnismatrix wird eine Summe gebildet, die mit einem Faktor gewichtet wird. Die gewichteten Summen der jeweiligen Ergebnismatrizen bilden einen Verknüpfungsparameter und mit dem Verknüpfungsparameter wird die Insassenklassifikation durchgeführt.

Die Aufgabe der vorliegenden Erfindung ist die Bereitstellung mindestens eines Verfahrens zur Mustererkennung auf Fahrzeugsitzen, das Personen von sonstigen Objekten, insbesondere von Kindersitzen sicher unterscheidet.

Die Aufgabe wird erfindungsgemäß durch die in den unabhängigen Ansprüchen angegebenen Merkmale gelöst. Vorteilhafte Ausführungsformen sind Gegenstand der Unteransprüche.

Die wesentlichen mit der Erfindung erzielbaren Vorteile bestehen darin, dass nur wenige Kriterien benötigt werden und die Kriterien nicht an spezielle Sensorstrukturen (matrixähnlich, diskret etc.) gebunden sind. Ferner muss, soweit notwendig, nur eine einfache logische Verknüpfung der einzelnen Kriterien vorgenommen werden. Andere Verfahren nach dem Stand der Technik müssen die einzelnen Kriterien mit aufwendigen Algorithmen kombinieren.

Unter Nachbarschaft wird verstanden, dass benachbarte Positionen einem gemeinsamen, zusammenhängenden Gebiet angehören. In der Mathematik ist ein Gebiet zusammenhängend, wenn sich zwei beliebige Punkte des Gebietes durch einen Verbindungsweg verbinden lassen, der ganz innerhalb des Gebietes verläuft, also das Gebiet nie verlässt.

Das erste erfindungsgemäße Verfahren gemäß Anspruch 1 schließt eine Person aus, wenn bestimmte Konstellationen von Bereichen auftreten, die eher für technische Objekte charakteristisch sind als für Personen. Insbesondere kann bei einer matrixförmigen Sensoranordnung ein technisches Objekt, also beispielsweise ein Kindersitz, leicht ein Druckmuster erzeugen, in dem eine ganze Spalte von Sensoren kein Signal liefert. Es gibt Kindersitze, die an ihrem Unterboden zwei in Fahrtrichtung ver- laufende Kufen aufweisen. Deren Druckmuster kann dann leicht eine oder mehrere Spalten aufweisen, in denen kein einziger Sensor ein Signal liefert. Eine solche Anordnung tritt bei einer Person praktisch nicht auf.

Das zweite erfindungsgemäße Verfahren nach Anspruch 9 schließt eine Person aus, wenn in einem bestimmten Gebiet kein oder nur ein sehr geringes Signal vorliegt. Beispielsweise weisen bei einer matrixförmigen Sensoranordnung Kindersitze häufig in einem Bereich im Innern des Sitzmusters wenige, oft sogar gar keine Sensorsignale auf.

Die Vorteile bestehen im wesentlichen darin, dass den erfindungsgemäßen Lösungen kein absoluter Druckwert zugrunde liegt. Sie sind im Falle einer diskreten Druckverteilung damit nicht sensibel auf eine spezielle Kalibrationskurve der Drucksensoren, sondern nur gegebenenfalls auf die Lage deren Turn-On-Points. Ferner führen sie in der Regel mit einfachen Konstellationen zum Erfolg.

Die Verfahren werden im Folgenden exemplarisch anhand bevorzugter Ausführungsformen beschrieben. Hierzu wird auf die Zeichnungen Bezug genommen, in denen gleiche Bezugszeichen jeweils gleiche Details bezeichnen.

Figur 1 : zeigt die Belegung eines Fahrzeugsitzes mit einer erwachsenen Person;

Figur 2 : zeigt die Belegung mit einem typischen Kindersitz;

Figur 3 : zeigt ein typisches Druckmuster einer erwachsenen Person;

Figur 4 : zeigt ein typisches Druckmuster eines Kindersitzes;

Figur 5 : zeigt eine typische Nachbarschaft eines Einzelsensors in einer matrixähnlichen Sensoranordnung;

Figur 6 : zeigt eine Möglichkeit für eine typische Nachbarschaft eines Einzelsensors in einer nicht matrixähnlichen Sensoranordnung;

Figur 7 : zeigt eine Möglichkeit für eine Konstellation in einer matrixähnlichen Sensoranordnung;

Figur 8 : zeigt eine Möglichkeit für eine Konstellation in einer nichtmatrixähnlichen Sensoranordnung.

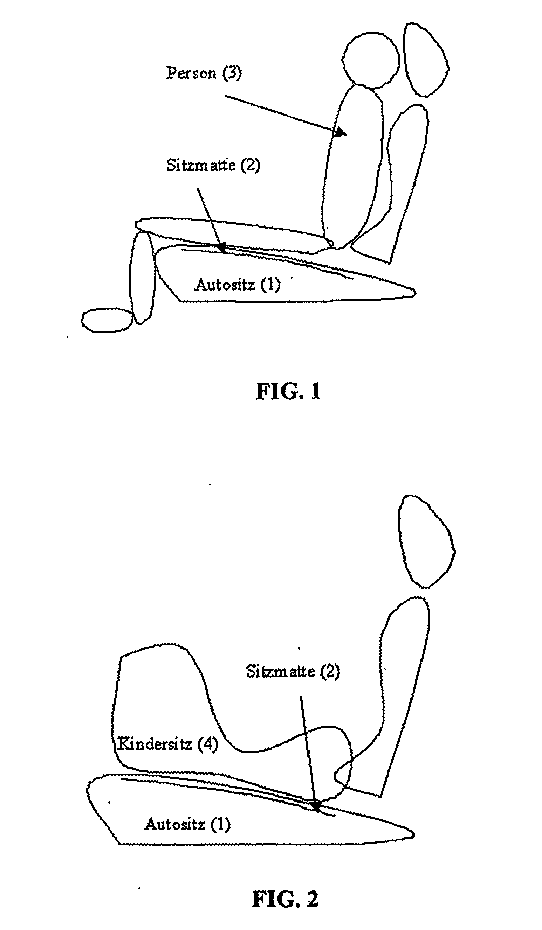

In Figur 1 ist ein Fahrzeugsitz 1 mit einer mit Drucksensoren versehenen Sitzmatte 2 sowie einer darauf sitzender Person 3 dargestellt. Figur 2 zeigt den Kraftfahrzeugsitz 1 mit einem alternativ darauf befestigten Kindersitz 4.

Eine Sensormatte auf der Sitzfläche liefert in dieser bevor- zugten Ausführungsform ein Druckmuster aus 9*12 Sensoren (9 Zeilen, 12 Spalten) mit 8-Bit Auflösung. Die Sensoren sind nicht notwendigerweise ganz rechtwinklig/matrixförmig ver- teilt, aber recht nahe daran. Die Anordnung kann aber in wei- ten Grenzen variiert werden.

Das Druckmuster wird auf das Zutreffen eines der beiden folgenden Kriterien für einen Kindersitz hin überprüft (ODER- Verknüpfung) :

Bis auf die Randsensoren, wird für jeden Sensor die mittlere Abweichung zu seinen Nachbarn berechnet. Sei $s_{ij}$ die Matrix mit den Sensorwerten. In unserem Beispiel läuft der Zeilenindex i von 1 bis 9, der Spaltenindex j von 1 bis 12. Zu jedem gegebenen $s_{ij}$ außer den Randwerten, also den Werten mit i=1, i=9, j=1 oder j=12, wird dann die 3x3 Untermatrix

$$\begin{pmatrix} s_{-1+i,-1+j} & s_{-1+i,j} & s_{-1+i,1+j} \\ s_{i,-1+j} & s_{i,j} & s_{i,1+j} \\ s_{1+i,-1+j} & s_{1+i,j} & s_{1+i,1+j} \end{pmatrix}$$

gebildet, also diejenige 3x3 Untermatrix, deren Mitte das betreffende Element $s_{ij}$ ist. Anschließend wird von jeder 3x3 Untermatrix jeweils der Mittelwert

$$m_{ij} = \sum_{j'=j-1}^{j'=j+1} \sum_{i'=i-1}^{i'=i+1} s_{i'j'}$$

und die Standardabweichung

$$\sigma_{ij} = \sum_{j'=j-1}^{j'=j+1} \sum_{i'=i-1}^{i'=i+1} (s_{i'j'} - m_{ij})^2$$

gebildet, sowie die relative Standardabweichung

$$\frac{\sigma_{ij}}{m_{ij}} .$$

Diese relative Standardabweichung ist ein Maß dafür, wie flach die Druckverteilung an der betreffenden Stelle ist. Je flacher sie ist, desto geringer fällt die Standardabweichung aus. Die Normierung auf den Mittelwert ist hierbei wichtig, um Stellen mit unterschiedlichen Sensorwerten miteinander vergleichen zu können.

Die Liste dieser Werte wird in dieser bevorzugten Ausführungsform für einen Datensatz mittels einer Schwelle sl in zwei Bereiche getrennt. Die Anzahl $N_{>Schwelle}$ der Werte größer als dieser Schwelle werden ins Verhältnis zur Gesamtzahl $N_{Gesamt}$ gebracht, d.h. es wird der Quotient

$$N_{relativ} = \frac{N_{Gesamt}}{N_{>Schwelle}}$$

gebildet. Dieses Merkmal sagt aus, wieviele Sensoren stark von ihrer Nachbarschaft abweichen. Je mehr Sensoren abweichen, desto kleiner ist das Verhältnis.

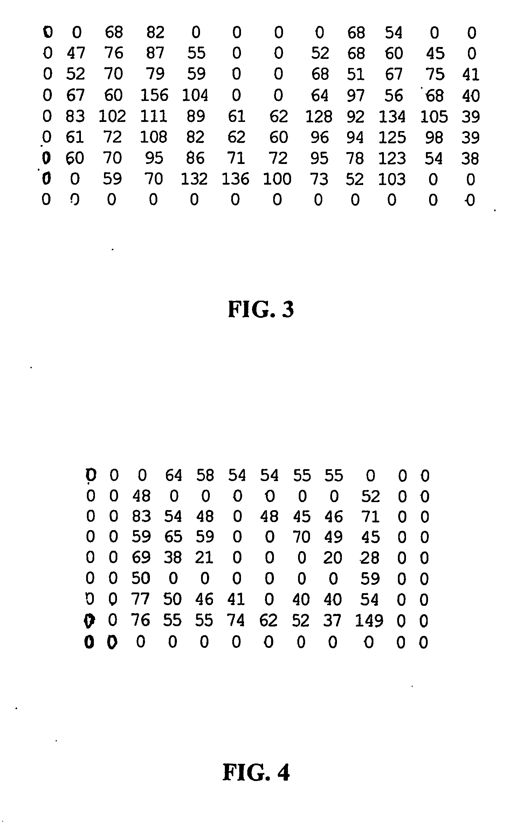

Wie eingangs erwähnt, sind in den Figuren 3 und 4 Beispiele der erhaltenen Druckmusterverteilungen für die beiden in Figur 1 (Person) und Figur 2 (Kindersitz) dargestellten Varianten gezeigt. Die Zahlenwerte stellen dabei die Signale der Drucksensoren der Sensormatte dar. Der Bezug der Signale zu den Druckwerten ist durch eine Kalibrationskurve gegeben. Die Kalibrationskurve verläuft zunächst bis zu einem Anfangs-Druckwert (Turn-On-Point) flach, d.h. bei Druckwerten unterhalb des Anfangs-Druckwertes gibt der Drucksensor kein Signal. Oberhalb des Anfangs-Druckwertes liefert der Sensor ein Signal, das eine monoton wachsende Funktion des Druckes ist. Für eine Schwelle von 0.2 hat das o.g. Verhältnis bei dem Druckmuster von Figur 3 (erwachsene Person) einen Wert von 2.26, bei dem Druckmuster von Figur 4 (Kindersitz) einen Wert von 1.08.

Die Unterscheidung zwischen Kindersitzen und Personen wird dann dadurch vorgenommen, daß für $N_{relativ}$ eine zweite Schwelle gesetzt wird. Bei den untersuchten Datensätzen hat sich insbesondere eine zweite Schwelle von 1.22 bewährt. Bei niedrigeren Werten wird das Druckmuster als Kindersitz klassifiziert, bei höheren als Person.

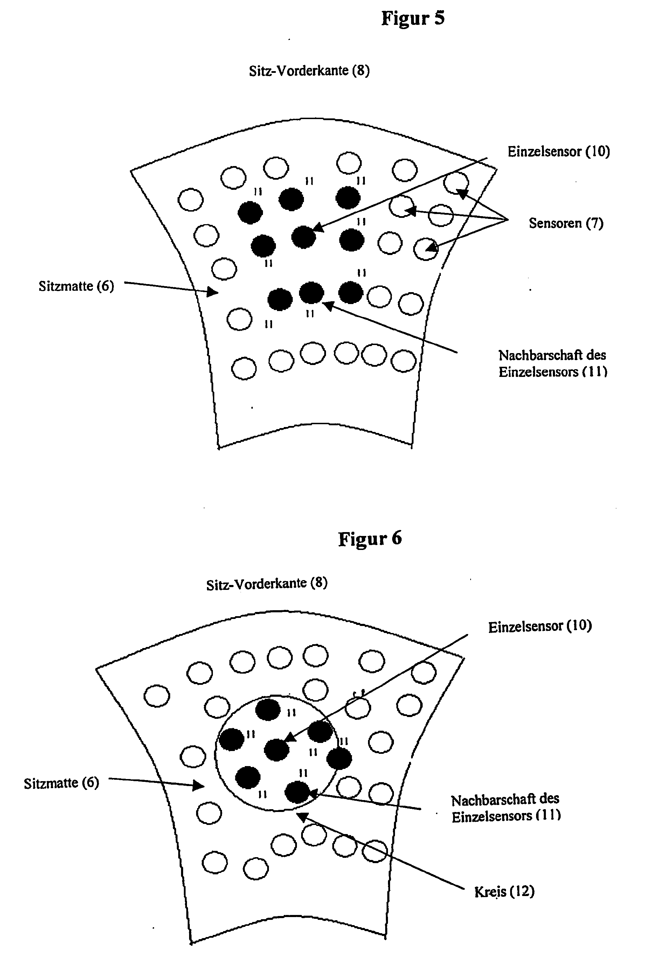

Es ist klar, daß sich diese Ausführungsform der Erfindung auch auf andere Weise ausführen läßt, als in dieser bevorzugten Ausführungsform beschrieben ist. Insbesondere könnte in einer alternativen Ausführungsform mit einer matrixförmigen Sensoranordnung auch eine größere Untermatrix, beispielsweise 4x4 oder 5x5, zur Bewertung der Nachbarschaft herangezogen werden. Diskrete Sensoranordnungen müssen auch keine matrixähnliche Struktur aufweisen, sondern können frei verteilt vorliegen. In Figur 5 ist ein Beispiel für eine matrixähnliche Sensoranordnung angegeben, in Figur 6 ein Beispiel für eine nicht-matrixähnliche Sensoranordnung.

In einer weiteren Ausführungsform könnte die Nachbarschaft beispielsweise über den geometrischen Abstand definiert werden, d.h. alle Sensoren, die innerhalb eines Kreises mit einem bestimmten Radius um einen Sensor liegen, gelten als Nachbarn. Insbesondere ist in Figur 5 die Nachbarschaft **11** eines Einzelsensors **10** für eine matrixähnliche Sensoranordnung dargestellt. Figur 6 gibt ein Beispiel für die Definition der Nachbarschaft **11** eines Einzelsensors **10** durch einen Kreis **12** in einem bestimmten geometrischen Abstand um einen Einzelsensor **10**. Auch weitere Ausführungsformen mit anderen Definitionen von Nachbarschaft sind denkbar.

Man könnte beispielsweise auch zu jedem Sensor alle Abstände zu den restlichen Sensoren bestimmen, diese Abstände aufsteigend anordnen, und dann immer eine bestimmte Anzahl von Sensoren, vom Anfang dieser Liste aus gezählt, als Nachbarschaft des Sensors betrachten.

Eine weitere mögliche Definition von Nachbarschaft erhält man, wenn man, wie in der Mathematik bekannt, statt der euklidischen Norm eine andere Norm wählt, beispielsweise die Maximums-Norm. Dem Kreis mit einem bestimmten Radius (euklidische Norm) um einen Sensor entspricht bei der Maximums-Norm beispielsweise die Angabe eines Rechtecks.

Diese Beispiele sollen nicht so verstanden werden, daß immer alle Punkte des zusammenhängenden Gebietes betrachtet werden. Zwar muß man ein zusammenhängendes Gebiet angeben können, innerhalb dem alle als benachbart angesehenen Punkte liegen, aber dem Gebiet können auch nicht benachbarte Punkte angehören.

Beispielsweise kann man die Nachbarschaft wie oben genannt über die euklidische Norm definieren, aber dann den Kreismittelpunkt explizit ausnehmen. Oder man kann beispielsweise in einer matrixähnlichen Sensoranordnung die Nachbarschaft wie oben genannt über die Maximumsnorm definieren, aber dann die Diagonalelemente der Matrix explizit ausnehmen.

Das zusammenhängende Gebiet muss auch nicht bei allen Punkten der Druckverteilung gleich sein. Es ist beispielsweise im Falle einer Definition der Nachbarschaft über die euklidische Norm nicht erforderlich, dass der Kreisradius über die gesamte Druckverteilung gleich ist. Er kann beispielsweise mit einer beliebigen mathematischen Funktion ortsabhängig variieren.

Nachbarschaft kann bei einer diskreten Druckverteilung sogar so bestimmt werden, dass man explizit angibt welche Sensoren zu einem bestimmten Sensor als benachbart gelten.

Die Druckverteilung könnte in einer weiteren Ausführungsform auch kontinuierlich sein. Das vorstehend beschriebene Verfahren lässt sich dann sinngemäss beispielsweise in einer Ausführungsform dadurch übertragen, dass die kontinuierliche Druckverteilung an einem Gitter von Stützstellen ausgewertet wird und hierauf das Verfahren angewendet wird.

Nachstehend wird ein erfindungsgemäßes Verfahren näher dargestellt ("Technisches-Gerät-Kriterium"): Dieses Verfahren wird am leichtesten anhand der exemplarischen Ausführungsform von matrixförmig angeordneten diskreten Sensoren deutlich. In einer solchen Anordnung ist es für das Sitzmuster einer Person beispielsweise sehr unwahrscheinlich, dass eine ganze Spalte von Sensoren kein Signal liefert, wenn alle anderen Spalten ein Signal liefern. Für ein technisches Gerät, wie etwa einen Kindersitz, ist dies aber sehr leicht möglich, beispielsweise, wenn dieses gerade Kanten, eckige oder feste Strukturen aufweist.

Man kann diese Ausführungsform leicht erweitern, und weitere Konstellationen von aktiven und nicht aktiven Spalten benennen, die bei einer Person höchst selten auftreten dürften, bei technischen Geräten aber leicht möglich sind.

Bei diesem Verfahren hat sich beispielsweise die Auswahl der Konstellationen 111110,111100, 001111, 111111, 011101, 111101,101110, 001111, 101111, 111010, 111011,110110, 110111,010111 für die Spalten 4 bis 9 für Personen bewährt, d. h. jede dieser Konstellationen wird als Person gewertet. Hierbei steht eine 1 für eine aktive Spalte, d. h. eine Spalte, die Sensoren mit Signal größer Null enthält. Eine 0 steht entsprechend für eine nicht-aktive Spalte, d. h. für eine Spalte, bei der alle Sensorwerte Null sind.

Auch die in dieser bevorzugten Ausführungsform genannte Beschränkung auf eine matrixförmige Sensoranordnung ist selbstverständlich nicht notwendig. Es kann in weiteren Ausführungsformen mit einer anderen Unterteilung des Gesamtgebietes, in dem die Druckverteilung vorliegt, in disjunkte Teilgebiete gearbeitet werden.

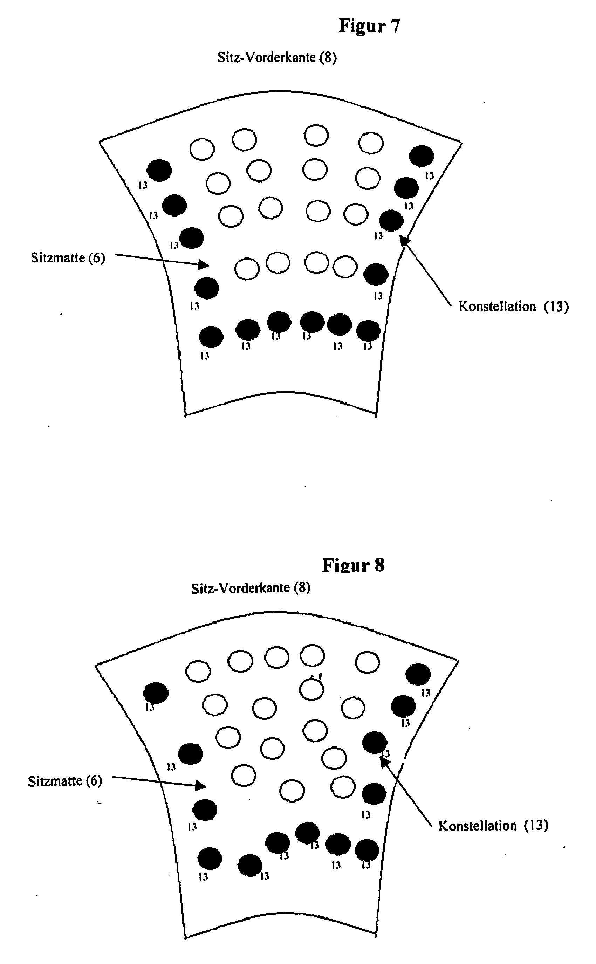

Insbesondere ist eine U-förmige Konstellation 13 von Sensoren in Figur 7 in einer matrixähnlichen Sensoranordnung gezeigt, in Figur 8 in einer nicht matrixähnlichen Sensoranordnung.

Die beiden Figuren zeigen, dass für die Bestimmung von Konstellationen eine matrixähnliche Sensoranordnung nicht notwendig ist.

Die in den Ansprüchen gewählte Formulierung soll einerseits der Möglichkeit einer kontinuierlichen Druckverteilung gerecht werden, und andererseits auch im Falle diskreter Drucksensoren die Möglichkeit vorsehen, eine Schwelle zur Rauschunterdrückung zu setzen.

Nachstehend wird ein weiteres erfindungsgemäßes Verfahren näher dargestellt ("Loch-Kriterium") : Betrachtet man gezielt einen bestimmten Teilbereich des gesamten Druckmusters, ist es möglich, Personen auszuschließen, wenn in diesem Teilbereich keinerlei Sensorantwort vorliegt, oder nur ein sehr geringes Summensignal, das unterhalb einer bestimmten Rausch-Schwelle liegt.

In einer bevorzugten Ausführungsform der Erfindung werden beispielsweise Kindersitze und Personen dadurch unterschieden, dass man hierzu einen Bereich in der Mitte des Druckmusters heranzieht. Ist dieser groß genug gewählt, ist es einer Person nur bei sehr ausgefallenen Sitzpositionen möglich, hier keine Sensorantwort zu bewirken. Andererseits treten solche "Löcher" im Druckmuster bei einer Vielzahl von Kindersitzen sehr leicht auf, da sie häufig so gebaut sind, dass Sie die Last am Rand abtragen und nicht in der Mitte.

Ein Beispiel ist das Druckmuster der Figur 4, das einen Kindersitz darstellt. Dieses Druckmuster weist im Bereich von Zeile 4 bis 6 und Spalte 6 bis 7 nur Sensorwerte Null auf. Im Gegensatz dazu weist das Druckmuster der Figur 3, das einen Erwachsenen darstellt, in diesem Bereich mehrere Sensoren mit deutlichem Signal auf.

Wünscht man eine größere Stabilität gegen Rauschen, könnte man den betrachteten Bereich in der Mitte des Druckmusters auch deutlich größer wählen. Dann treten zwar auch bei einem Kindersitz evtl. einzelne Sensoren mit Signalen ungleich Null auf, aber wenige im Vergleich zu einer Person. Die Trennung zwischen Personen und Kindersitzen würde dann durch eine geeignete Schwelle für das Summensignal in diesem Bereich erfolgen.

Gemäß einer bevorzugten Weiterbildung der Erfindung werden mehrere Kriterien kombiniert eingesetzt werden, wobei die Kombination in einer logischen Verknüpfung ihrer einzelnen Aussagen besteht. Auch die mehrfache Verwendung des gleichen Kriteriums, aber mit anderen Parametern, ist hierbei eine mögliche Variante. Insbesondere werden zwei oder alle drei der oben beschriebenen Verfahren (Kriterien) in der Praxis gemäß einer bevorzugten Weiterbildung der Erfindung durch ODER für einen Kindersitz (bzw. "Nicht-Person") verknüpft, d. h. wenn mindestens eines von ihnen eine Person ausschließt, handelt es sich nicht um eine Person.

Eine weitere Weiterbildung ergibt sich durch die Beschränkung auf Datensätze, die eine gewisse Schwelle für die Gesamtsumme der Sensorwerte überschreiten.

Die vorstehend beschriebene bevorzugte Weiterbildung soll in keiner Weise als Einschränkung verstanden werden. Ohne den Bereich der Erfindung zu verlassen, sind eine Vielzahl von Modifikationen denkbar.

Es ist beispielsweise keinesfalls notwendig, eine diskrete Sensor-Anordnung zu verwenden. Es gibt auch Ausführungsformen mit kontinuierlichem Druckmuster. Das in den Ansprüchen genannte Summensignal wird im Falle einer kontinuierlichen Druckverteilung sinngemäß durch ein Integral der Druckverteilung realisiert, eine Mittelung durch den Mittelwertsatz der Integralrechnung, in der Weise, wie es in der Mathematik üblich ist.

Falls eine diskrete Sensor-Anordnung gewählt wird, ist es wiederum nicht notwendig, diese matrixförmig auszuführen. Ohne den Bereich der Erfindung zu verlassen, können die Sensoren in weiteren Ausführungsformen in einer beliebigen Form verteilt sein, auch in einer Anordnung die eine Einteilung in Zeilen und Spalten unmöglich macht, und in der Nachbarschaft beispielsweise nur über den geometrischen Abstand zwischen den einzelnen Sensoren definiert wird. Es kann beispielsweise auch ein von beliebig verteilten Drucksensoren gebildetes Druckmuster mit einem zeilen- oder spaltenorientierten Auswerteschritt dadurch kombiniert werden, daß eine Interpolations- oder Fitfunktion zwischengeschaltet wird. Die beliebig verteilten Druckwerte dienen dann als Stützstellen für eine solche Interpolations- oder Fitfunktion, die dann ihrerseits an beispielsweise rechtwinklig verteilten Stellen wieder ausgelesen wird. Erst die ausgelesenen Interpolations- oder Fit-Werte werden in dieser Ausführungsform dann durch den Algorithmus bewertet.

Das Druckmuster kann vorzugsweise durch Gewichtsfunktionen oder Kalibration modifiziert werden. Ebenso kann in Weiterbildungen auch nach einer Summen- oder Mittelwertbildung eine weitere mathematische Operation durchgeführt werden, ohne den Bereich der Erfindung zu verlassen.

**Patentansprüche**

1. Verfahren zur Unterscheidung von Personen und sonstigen Objekten auf Fahrzeugsitzen durch Aufname und Auswertung der durch sie auf dem Sitz bewirkten Druckverteilung, **dadurch gekennzeichnet, daß** bei einer Unterteilung des Gebietes, in dem die genannte Druckverteilung ermittelt wird, in Teilgebiete bestimmte Konstellationen von aktiven zu inaktiven Gebieten als Person bewertet werden, wobei unter einem aktiven Gebiet verstanden wird, daß ein Summensignal der Sensorwerte von Sensoren in diesem Gebiet oberhalb einer bestimmten Schwelle liegt.

2. Verfahren nach Anspruch 1, **dadurch gekennzeichnet, daß** die Teilgebiete benachbart sind.

3. Verfahren nach Anspruch 1, **dadurch gekennzeichnet, daß** die Teilgebiete sich nicht gegenseitig überdecken.

4. Verfahren nach einem der Ansprüche 1 bis 3, **dadurch gekennzeichnet, daß** die Vereinigung der Teilgebiete das Gesamtgebiet darstellt.

5. Verfahren nach einem der Ansprüche 1 bis 4, **dadurch gekennzeichnet, daß** mindestens eines der Signale vor der Bildung des Summensignals einer mathematischen Funktion unterworfen wird.

6. Verfahren nach Anspruch 5, **dadurch gekennzeichnet, daß** die genannte mathematische Funktion monoton steigend oder monoton fallend ist.

7. Verfahren nach einem der Ansprüche 1 bis 6, **dadurch gekennzeichnet, daß** das Summensignal vor dem Vergleich mit der Schwelle einer mathematischen Funktion unterworfen wird.

8. Verfahren nach Anspruch 7, **dadurch gekennzeichnet, daß** die genannte mathematische Funktion monoton steigend oder monoton fallend ist.

9. Verfahren zur Unterscheidung von Personen und sonstigen Objekten auf Fahrzeugsitzen durch Aufname und Auswertung der durch sie auf dem Sitz bewirkten Druckverteilung, **dadurch gekennzeichnet, daß** ein Summensignal der Sensorwerte von Sensoren in einem Teilgebiet des Gebietes, in dem die Druckverteilung vorliegt, gebildet wird, und aus dem Summensignal und einer Schwelle ein Ergebniswert abgeleitet wird, der zwischen Personen und sonstigen Objekten unterscheidet.

**10.** Verfahren nach Anspruch 9, **dadurch gekennzeichnet, daß** das genannte Teilgebiet ein mittleres Gebiet umfaßt, wobei unter einem mittleren Gebiet ein Teilgebiet verstanden wird, das keine Teile des Randes enthält.

**11.** Verfahren nach einem der genannten Ansprüche, **dadurch gekennzeichnet, daß** die genannte Auswertung nur in einem Teilgebiet vorgenommen wird.

**12.** Verfahren nach einem der genannten Ansprüche, **dadurch gekennzeichnet, daß** die genannte Auswertung einer mathematischen, zeitabhängigen Funktion unterworfen wird.

**13.** Verfahren nach Anspruch 12, **dadurch gekennzeichnet, daß** die genannte mathematische Funktion eine zeitliche Mittelung ist.

**14.** Verfahren nach einer Auswahl der genannten Ansprüche, **dadurch gekennzeichnet, daß** die vorgenommenen Ergebnisse der Unterscheidung von Personen und sonstigen Objekten der jeweiligen einzelnen Ansprüche miteinander logisch verknüpft werden.

**15.** Verfahren nach Anspruch 14, **dadurch gekennzeichnet, daß** die genannte logische Verknüpfung eine UND-Verknüpfung ist.

**16.** Verfahren nach Anspruch 14, **dadurch gekennzeichnet, daß** die genannte logische Verknüpfung eine ODER-Verknüpfung ist.

**17.** Verfahren nach Anspruch 15 oder 16, **dadurch gekennzeichnet, daß** vor der Durchführung der genannten logischen Verknüpfung mindestens eines der Teilergebnisse negiert wird.

**18.** Verfahren nach mindestens einem der Ansprüche 14 bis 17, **dadurch gekennzeichnet, daß** mehrere logische Verknüpfungen im Sinne einer mathematischen Klammerung miteinander kombiniert werden können.

**19.** Verfahren nach einem der vorherigen Ansprüche, **dadurch gekennzeichnet, daß** das Gebiet, in dem die Druckverteilung ermittelt wird, eine Sensormatte mit einer Anzahl von Drucksensoren ist.

**20.** Verfahren nach Anspruch 19, **dadurch gekennzeichnet, daß** die Sensormatte mindestens drei Sensoren enthält.

**21.** Verfahren nach einem der genannten Ansprüche, **dadurch gekennzeichnet, daß** Druckmuster, bei denen die Gesamtintensität der Druckverteilung unter einer bestimmten Schwelle liegt, nicht als Person bewertet werden.

**22.** Verfahren nach einem der genannten Ansprüche, **dadurch gekennzeichnet, daß** die benachbarten Punkte einem gemeinsamen, zusammenhängenden Gebiet angehören.

**23.** Verfahren nach Anspruch 22, **dadurch gekennzeichnet, daß** unter einem zusammenhängenden Gebiet verstanden wird, daß sich zwei beliebige Punkte des Gebietes durch einen Verbindungsweg verbinden lassen, der ganz innerhalb des Gebietes verläuft.

**Claims**

**1.** A method for distinguishing between people and other objects on vehicle seats by recording and evaluating the pressure distribution caused by them on the seat, **characterised in that** in a division of the area, in which said pressure distribution is determined, into part areas, certain constellations of active to inactive areas are evaluated as a person, wherein an active area is taken to mean that a total signal of the sensor values of sensors in this area is above a certain threshold.

**2.** A method according to claim 1, **characterised in that** the part areas are adjacent.

**3.** A method according to claim 1, **characterised in that** the part areas do not mutually overlap.

**4.** A method according to any one of claims 1 to 3, **characterised in that** the combination of the part areas is the overall area.

**5.** A method according to any one of claims 1 to 4, **characterised in that** at least one of the signals is subjected to a mathematical function before the formation of the total signal.

**6.** A method according to claim 5, **characterised in that** said mathematical function is monotonically increasing or monotonically decreasing.

**7.** A method according to any one of claims 1 to 6, **characterised in that** the total signal is subjected to a mathematical function before the comparison with the threshold.

8. A method according to claim 7, **characterised in that** said mathematical function is monotonically increasing or monotonically decreasing.

9. A method for distinguishing between people and other objects on vehicle seats by recording and evaluating the pressure distribution caused by them on the seat, **characterised in that** a total signal of the sensor values of sensors in a part area of the area, in which the pressure distribution is present, is formed, and a result value is derived from the total signal and a threshold, which result value distinguishes between people and other objects.

10. A method according to claim 9, **characterised in that** said part area comprises a central area, a central area being taken to mean a part area, which contains no parts of the edge.

11. A method according to any one of said claims, **characterised in that** said evaluation is only carried out in a part area.

12. A method according to any one of said claims, **characterised in that** said evaluation is subjected to a mathematical, time-dependent function.

13. A method according to claim 12, **characterised in that** said mathematical function is a time averaging.

14. A method according to a selection of said claims, **characterised in that** the implemented results of distinguishing between people and other objects of the respective individual claims are logically linked to one another.

15. A method according to claim 14, **characterised in that** said logic linking is an AND operation.

16. A method according to claim 14, **characterised in that** said logic link is an OR operation.

17. A method according to claim 15 or 16, **characterised in that** prior to carrying out said logic linking, at least one of the part results is negated.

18. A method according to at least any one of claims 14 to 17, **characterised in that** a plurality of logic links can be combined with one another in the sense of a mathematical bracketing.

19. A method according to any one of the preceding claims, **characterised in that** the area in which the pressure distribution is determined, is a sensor mat with a number of pressure sensors.

20. A method according to claim 19, **characterised in that** the sensor mat contains at least three sensors.

21. A method according to any one of said claims, **characterised in that** pressure patterns, in which the overall intensity of the pressure distribution is below a certain threshold, are not evaluated as a person.

22. A method according to any one the said claims, **characterised in that** the adjacent points belong to a common, interconnected area.

23. A method according to claim 22, **characterised in that** an interconnected area is taken to mean that any two points of the area can be connected by a connection path, which extends completely within the area.

## Revendications

1. Procédé pour distinguer des personnes et d'autres objets placés sur des sièges de véhicule par la saisie et l'exploitation de la distribution de pression produite sur le siège,
   **caractérisé en ce qu'**
   en subdivisant le domaine dans lequel on détermine la distribution de pression, on exploite des constellations déterminées dans des domaines partiels allant de domaines actifs jusqu'à des domaines inactifs pour les considérer comme une personne, un domaine actif signifiant que le signal somme des valeurs fournies par les capteurs dans ce domaine dépasse un certain seuil.

2. Procédé selon la revendication 1,
   **caractérisé en ce que**
   les domaines partiels sont voisins.

3. Procédé selon la revendication 1,
   **caractérisé en ce que**
   les domaines partiels ne se chevauchent pas réciproquement.

4. Procédé selon l'une quelconque des revendications 1 à 3,
   **caractérisé en ce que**
   la réunion des domaines partiels représente le domaine total.

5. Procédé selon l'une quelconque des revendications 1 à 4,
   **caractérisé en ce qu'**
   au moins l'un des signaux est soumis à une fonction mathématique avant de former le signal somme.

6. Procédé selon la revendication 5,
   **caractérisé en ce que**

la fonction mathématique est une fonction monotone croissante ou monotone décroissante.

7. Procédé selon l'une quelconque des revendications 1 à 6,
**caractérisé en ce que**
le signal somme est soumis à fonction mathématique avant d'être comparé à un seuil.

8. Procédé selon la revendication 7,
**caractérisé en ce que**
la fonction mathématique est une fonction monotone croissante ou monotone décroissante.

9. Procédé pour distinguer des personnes et d'autres objets installés sur un siège de véhicule par saisie et exploitation de la distribution de pression produite sur le siège,
**caractérisé en ce qu'**
on forme un signal somme des valeurs des capteurs dans une partie du domaine dans lequel il y a la distribution de pression et à partir du signal somme et d'un seuil on déduit une valeur de résultat permettant de distinguer entre les personnes et d'autres objets.

10. Procédé selon la revendication 9,
**caractérisé en ce que**
le domaine partiel évoqué entoure un domaine moyen, l'expression domaine moyen signifiant qu'il ne contient aucune partie du bord.

11. Procédé selon l'une quelconque des revendications précédentes,
**caractérisé en ce que**
l'exploitation n'est faite que dans un domaine partiel.

12. Procédé selon l'une quelconque des revendications précédentes,
**caractérisé en ce que**
l'exploitation est soumise à une fonction mathématique dépendant du temps.

13. Procédé selon la revendication 12,
**caractérisé en ce que**
la fonction mathématique est une moyenne dans le temps.

14. Procédé selon l'une quelconque des revendications précédentes,
**caractérisé en ce que**
les résultats entrepris de distinction entre personnes et autres objets selon les différentes revendications sont combinés entre eux par une combinaison logique.

15. Procédé selon la revendication 14,
**caractérisé en ce que**

la combinaison logique est une combinaison ET.

16. Procédé selon la revendication 14,
**caractérisé en ce que**
la combinaison logique est une combinaison OU.

17. Procédé selon l'une quelconque des revendications 15 ou 16,
**caractérisé en ce qu'**
avant d'effectuer la combinaison logique, on affecte la négation à au moins l'un des résultats partiels.

18. Procédé selon l'une quelconque des revendications 14 à 17,
**caractérisé en ce que**
l'on combine plusieurs combinaisons logiques dans le sens d'un regroupement mathématique.

19. Procédé selon l'une quelconque des revendications précédentes,
**caractérisé en ce que**
le domaine dans lequel on détermine la distribution de pression est une nappe de capteurs avec un certain nombre de capteurs de pression.

20. Procédé selon la revendication 19,
**caractérisé en ce que**
la nappe de capteurs comporte au moins trois capteurs.

21. Procédé selon l'une quelconque des revendications précédentes,
**caractérisé en ce que**
le modèle de pression pour lequel l'intensité totale de la distribution de pression se situant en dessous d'un certain seuil n'est pas exploité comme correspondant à une personne.

22. Procédé selon l'une quelconque des revendications précédentes,
**caractérisé en ce que**
les points voisins appartiennent à un domaine commun lié.

23. Procédé selon la revendication 22,
**caractérisé en ce qu'**
un domaine lié signifie que deux points quelconques du domaine peuvent être reliés par un chemin de liaison qui passe totalement dans le domaine.

Person (3)

Sitzmatte (2)

Autositz (1)

**FIG. 1**

Sitzmatte (2)

Kindersitz (4)

Autositz (1)

**FIG. 2**

```
0   0   68   82    0    0    0    0   68   54    0    0
0  47   76   87   55    0    0   52   68   60   45    0
0  52   70   79   59    0    0   68   51   67   75   41
0  67   60  156  104    0    0   64   97   56   68   40
0  83  102  111   89   61   62  128   92  134  105   39
0  61   72  108   82   62   60   96   94  125   98   39
0  60   70   95   86   71   72   95   78  123   54   38
0   0   59   70  132  136  100   73   52  103    0    0
0   0    0    0    0    0    0    0    0    0    0    0
```

## FIG. 3

```
0   0    0   64   58   54   54   55   55    0    0   0
0   0   48    0    0    0    0    0    0   52    0   0
0   0   83   54   48    0   48   45   46   71    0   0
0   0   59   65   59    0    0   70   49   45    0   0
0   0   69   38   21    0    0    0   20   28    0   0
0   0   50    0    0    0    0    0    0   59    0   0
0   0   77   50   46   41    0   40   40   54    0   0
0   0   76   55   55   74   62   52   37  149    0   0
0   0    0    0    0    0    0    0    0    0    0   0
```

## FIG. 4

## Figur 5

Sitz-Vorderkante (8)

Einzelsensor (10)

Sensoren (7)

Sitzmatte (6)

Nachbarschaft des
Einzelsensors (11)

## Figur 6

Sitz-Vorderkante (8)

Einzelsensor (10)

Sitzmatte (6)

Nachbarschaft des
Einzelsensors (11)

Kreis (12)

## Figur 7

Sitz-Vorderkante (8)

Sitzmatte (6)

Konstellation (13)

## Figur 8

Sitz-Vorderkante (8)

Sitzmatte (6)

Konstellation (13)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- LU 90106
- US 6348663 B
- US 6243634 B
- US 5941560 A
- US 6170866 B
- US 6366200 B
- US 6272411 B
- US 6252 A
- US 240 A
- DE 10047189 C1